# EUROPEAN PATENT APPLICATION

(11) **EP 3 231 696 A1**
(43) Date of publication of application: **18.10.2017**
(21) Application number: 17382138.0
(22) Date of filing: 17.03.2017
(51) Int. Cl.: B62K 23/02, B62M 6/45, B62K 23/04, B60W 20/19, B62K 11/14

(54) **CONTROL DEVICE FOR ELECTRIC VEHICLE AND ELECTRIC VEHICLE COMPRISING SAID DEVICE**

(30) Priority: 18.03.2016 ES 201630353
(71) Applicant: Bultaco Motors SL, 28023 Madrid (ES)
(72) Inventor: Safont Sala, Jaume, 08006 Barcelona (ES)
(74) Representative: Durán-Corretjer, S.L.P.

(57) **Abstract**

Control device for electric vehicle comprising:
- a first user control in the form of a gas fist (2) ,
- a controller,
wherein the first user command (2) provides the controller with a desired instantaneous power or torque signal, the controller being configured such that it generates a control signal from an electric motor corresponding to the desired power or torque.

The device comprises a second user command (3) which provides a maximum power or torque signal , the controller being configured such that when the second controller sends said maximum power or torque signal, the control signal generated by the controller is a constant signal corresponding to said power signal or maximum torque.

## Description

The present invention relates to a device for controlling an electric vehicle and to an electric vehicle having said device.

The control device according to the present invention is particularly advantageous when applied to electric vehicles that have a handlebar, such as electric bikes or e-bikes, light motorcycles, mopeds, scooters and three-wheel vehicles. These vehicles may be propelled electrically only, or, more commonly, two sources of propulsion can be combined, for example an electric battery and human propulsion (for example using pedals).

One concern in any mechanically propelled vehicle is the battery life. Naturally, the user can drive carefully without using up much of the battery, for example by manually limiting the speed. However, this requires a great deal of attention from the user, which impairs the driving experience while also being inefficient, since the battery can be used up very quickly if the terrain is hilly, even at moderate speeds.

Furthermore, electric-powered vehicles are known that have a control device having a control on the handlebar or throttle that provides a desired power or torque value to the control device. The control device requests, from the electric motor, the torque or power corresponding to the signal transmitted by the control on the handlebar. This device is similar to the throttle of motorcycles that have an internal combustion engine.

Also known are bicycles that are assisted by an electric motor and comprise a control device designed to save energy in that the control device requests a torque or power from the electric motor depending on a sensor measurement, such as the speed of the vehicle or the torque or moment generated by the user on the pedals.

An object of the present invention is to disclose new means for saving battery power that do not require much attention from the user.

Specifically, the present invention discloses a control device for an electric vehicle comprising:
- a first user control in the form of a throttle,
- a controller,
the first user control providing the controller with a desired instantaneous power or torque signal, the controller being designed so as to generate a signal for controlling an electric motor corresponding to the desired power or torque;
characterised in that
the device comprises a second user control that provides a maximum power or torque signal, the controller being designed such that, when the second controller sends said maximum power or torque signal, the control signal generated by the controller is a constant signal corresponding to said maximum power or torque signal.

Preferably, the second user control is a pushbutton.

Alternatively, the second user control makes it possible to select a maximum power or torque.

The present invention also discloses an electric-powered vehicle comprising:
- a handlebar,
- an electric motor,
- a device for controlling the electric motor,
characterised in that
the controller is a control device and the first user control and the second user control are located on the handlebar.

More preferably, the first and second user controls are located on opposite sides of the handlebar.

The present invention makes it possible to set the power or torque value supplied by the motor in particular driving situations, to be selected by the driver.

In this way, the present invention makes difficult routes more comfortable for the user, at uniform or constant speed, and allows the battery usage and thus the vehicle range to be controlled.

By means of the second control on the handlebar, the power or torque value can be set as desired, enabling much more comfortable driving at the same time as greater freedom of movement or more efficient driving, resulting in greater vehicle range.

To aid understanding, explanatory yet non-limiting drawings of an embodiment of the control device for an electric vehicle and of an electric vehicle comprising said device, according to the present invention, are appended to this description.

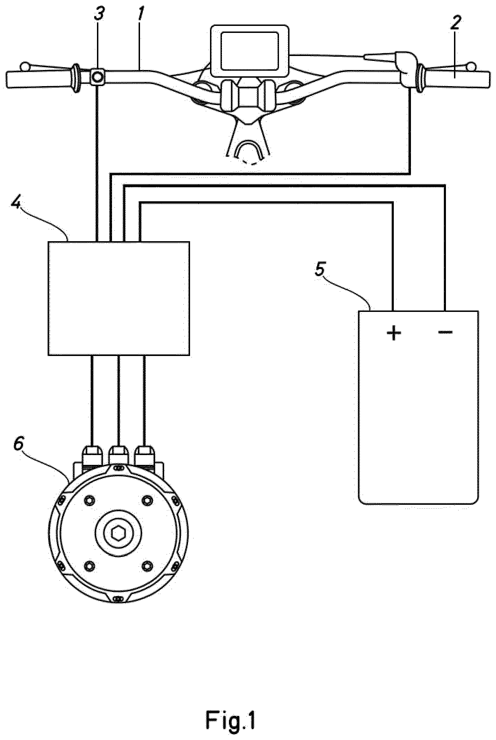

Fig. 1 is a schematic view of an embodiment of a control device according to the present invention, provided in a vehicle comprising a handlebar -1-.

For the sake of clarity, the remaining elements of the vehicle, for example an electric bicycle that combines electric propulsion with the possibility of propulsion by pedal, have not been shown.

The vehicle has a first control -2- on the handlebar -1- consisting of a "throttle". "Throttle" controls are known in the field of motorcycles and make it possible, by rotating said throttle, to ration the power/torque supplied by the powertrain or motor -6-.

To this end, the first control -2- provides the controller -4- with a desired instantaneous power or torque signal.

The example shown shows a second control -3-, in the form of a pushbutton, located at the opposite end of the handlebar -1- to the first control -2-. This second control -3- provides the controller -4- with a second power signal for setting the power or torque value being supplied by the driver using the throttle. By setting the power/torque in this way, the hand that controls the throttle has more freedom and driving becomes more comfortable, precise and economical. In particular, once the power/torque is limited, it is possible to reduce usage of the battery -5-.

Although the invention has been set out and described with reference to embodiments thereof, it should be understood that these do not limit the invention, and that it is possible to alter many structural or other details that may prove obvious for persons skilled in the art after interpreting the subject matter disclosed in the present description, claims and drawings. Therefore, the scope of the present invention includes any variant or equivalent that could be considered covered by the broadest scope of the following claims.

## Claims

1. Control device for an electric vehicle that comprises:
- a first user control in the form of a throttle,
- a controller,
the first user control providing the controller with a desired instantaneous power or torque signal, the controller being designed so as to generate a signal for controlling an electric motor corresponding to the desired power or torque;
**characterised in that**
the device comprises a second user control that provides a maximum power or torque signal, the controller being designed such that, when the second controller sends said maximum power or torque signal, the control signal generated by the controller is a constant signal corresponding to said maximum power or torque signal.

2. Device according to claim 1, **characterised in that** the second user control is a pushbutton.

3. Device according to either claim 1 or claim 2, **characterised in that** the second user control makes it possible to select a maximum power or torque.

4. Electric-powered vehicle comprising:
- a handlebar,
- an electric motor,
- a device for controlling the electric motor,
**characterised in that**
the controller is a control device according to any one of claims 1 to 3, and the first user control and the second user control are located on the handlebar.

5. Vehicle according to claim 4, **characterised in that** the first and second user controls are located on opposite sides of the handlebar.
